# EUROPÄISCHE PATENTSCHRIFT

(11) **EP 3 458 822 B1**
(45) Veröffentlichungstag und Bekanntmachung des Hinweises auf die Patenterteilung: **21.02.2024**
(21) Anmeldenummer: 17725498.4
(22) Anmeldetag: 17.05.2017
(51) Int. Cl.: G01M 3/04, G01M 3/28, G01M 3/18

(54) **VORRICHTUNG ZUR DETEKTION UND SIGNALISIERUNG EINES LECKS UND WÄRMETAUSCHER**
DEVICE FOR DETECTING AND SIGNALING A LEAK, AS WELL AS HEAT EXCHANGER
DISPOSITIF DE DÉTECTION ET DE SIGNALISATION D'UNE FUITE ET ÉCHANGEUR DE CHALEUR

(30) Priorität: 18.05.2016 CH 6412016
(43) Veröffentlichungstag der Anmeldung: 27.03.2019
(73) Patentinhaber: Joulia AG, 2503 Biel (CH)
(72) Erfinder: RUSCH, Christoph, 3257 Grossaffoltern (CH); SCHMID, Reto, 3073 Gümlingen (CH); SVATON, Roman, 2502 Biel (CH)
(74) Vertreter: Frei Patent Attorneys
(86) Internationale Anmeldenummer: PCT/CH2017/000046
(87) Internationale Veröffentlichungsnummer: WO 2017/197537

(56) Entgegenhaltungen:
- EP-A1- 0 365 042
- WO-A1-2009/093995
- US-A- 2 864 404
- US-A- 4 199 975
- US-A- 5 022 265
- US-B1- 6 914 531

## Beschreibung

Die Erfindung bezieht sich auf das Gebiet der Detektion und Signalisierung eines Lecks, insbesondere in einem doppelwandigen Leitungssystem eines Wärmetauschers beispielsweise für den Sanitärbereich.

Aus dem Stand der Technik sind Vorrichtungen zur Detektion und optischen Signalisierung eines Lecks bekannt. In einer einfachen Form wird das Wasser im Fall eines Lecks in den Boden geleitet, wodurch es zu sichtbaren Wasserschäden kommt, welche als optisches Signal dienen.

In verschiedenen Ländern existieren verschiedene Vorschriften für Leitungssysteme von Wärmetauschern, damit die Gefahr von Vermischung von Frisch- und Brauchwasser zum Beispiel im Falle eines Lecks verringert wird. In einigen Ländern muss das Leitungssystem doppelwandig ausgeführt sein. In einigen Ländern muss ein Leck innerhalb eines gewissen Zeitraums und/oder unter bestimmten Bedingungen detektierbar sein.

US 6914531 B1 zeigt einen Durchflusssensor, welcher einen übermässigen Wasserfluss detektiert, der einen vorgebgeben Grenzwert überschreitet. Der Durchflusssensor wird in einem kombinierten Heizungs-/Kühlungs- und Sprinklersystem eingesetzt: im Normalbetrieb wird er von geheiztem oder gekühlten Wasser durchströmt. Bei der Aktivierung eines oder mehrerer Sprinkler im Brandfall erhöht sich der Durchfluss, was mit dem Durchflusssensor detektiert wird. Dieser weist dazu eine Lochplatte auf, die vom Wasserfluss durchströmt wird und dabei dem Wasserfluss einen Widerstand entgegensetzt. Mit zunehmendem Wasserfluss wird die Lochplatte entgegen der Kraft einer Feder verschoben. Dabei kann auch ein Magnet verschoben werden und ein Reed-Relais betätigen. Alle Ausführungsformen zeigen Sensoreinrichtungen, die im Normalbetrieb durchströmt werden und nur beim Auftreten eines übermässigen Wasserflusses ansprechen.

EP 0365042 A1 und US 5022265 offenbaren eine Lecküberwachung eines fluidführenden Leitungssystems in einer Kammer. Dabei wird ein Testgas in die Kammer eingebracht und dessen Vorliegen im Fluid, im Falle eines Lecks, detektiert. Im zweiten Fall wird das Fluid entlang eines Membranseparators geführt, mit einer Membran, welche für das Fluid undurchlässig und für das Testgas durchlässig ist. Hinter der Membran ist ein Detektor für das Testgas angeordnet.

WO 2009/093995 A1 offenbart einen Bioreaktor, in welchem das Austreten von Flüssigkeiten durch Feuchtigkeitssensoren erkannt wird, welche die elektrische oder thermische Leitfähigkeit in einem Bereich unterhalb des Bioreaktors messen.

US 2864404 beschreibt einen Hochdruck- und Hochtemperatur-Wärmetauscher zur Verwendung mit sehr korrosiven Flüssigkeiten. Dieser weist ein doppelwandiges Leitungssystem auf, mit jeweils pro Leitungsabschnitt einer inneren und einem äusseren Rohrwand, und einem Zwischenraum, welcher durch Rillen in einer der Rohrwände gebildet ist. Ein Leckerkennungssystem für dieses doppelwandige Leitungssystem weist eine Kammer auf, in die Leckflüssigkeit aus den Zwischenräumen abgeführt wird. Die Anzeige erfolgt optisch über Inspektionsöffnungen, durch welche die Leckflüssigkeit bei Austritt aus der Kammer sichtbar ist.

Es ist Aufgabe der Erfindung eine verbesserte Vorrichtung zur Detektion und Signalisierung eines Lecks sowie einen Wärmetauscher zur Verfügung zu stellen, welche zum Beispiel
- ein Leck bereits kurz nach dessen Entstehung anzeigen können, und/oder
- ein Leck anzeigen können ohne dass substantielle Wasserschäden entstehen, und/oder
- deren Signal auch von einem unaufmerksamen Benutzer leicht wahrgenommen werden kann, und/oder
- welche kostengünstig herstellbar und/oder installierbar sind, und/oder
- wartungsfreundlich und/oder wiederverwendbar sind, und/oder
- bereits geringe Leckwasserströmung zuverlässig detektieren und signalisieren kann.

Diese Aufgabe löst eine Vorrichtung zur Detektion und Signalisierung eines Lecks gemäss Anspruch 1 sowie ein Wärmetauscher gemäss Anspruch 7.

Die Vorrichtung zur Detektion und Signalisierung eines Lecks in einem doppelwandigen Leitungssystem eines Wärmetauschers zum Aufwärmen von Frischwasser mittels Wärme von Abwasser im Sanitärbereich, durch Detektion von Leckflüssigkeit, welche im Fall eines Lecks aus einem Zwischenraum in einen Hohlraum gelangen kann, weist also auf
- ein elastisches Element
- und eine Signalisierungseinheit, wobei
- die Signalisierungseinheit dazu eingerichtet ist, ein akustisches Signal zu erzeugen, und
- durch eine mechanische Deformation des elastischen Elementes die Signalisierungseinheit zu aktivieren,
wobei die Vorrichtung aufweist:
- den Hohlraum, der dazu eingerichtet ist, mit einem Zwischenraum des
   doppelwandigen Leitungssystems verbunden zu werden, wobei
- das elastische Element einen Teil der Begrenzung des Hohlraums bildet,
- das elastische Element flüssigkeitsdicht ist,
- die Vorrichtung dazu eingerichtet ist, durch in den Hohlraum einfliessende Leckflüssigkeit den Druck in dem Hohlraum zu erhöhen,
- und durch diese Druckerhöhung die mechanische Deformation des elastischen Elementes durch in den Hohlraum einfliessende Leckflüssigkeit hervorzubringen.

Die Vorrichtung kann zur Detektion und Signalisierung von Eindringen von Flüssigkeit in einen Hohlraum eingerichtet sein. Insbesondere kann die Vorrichtung zur Detektion und Signalisierung eines Lecks eines doppelwandigen Leitungssystems eines Wärmetauschers zum Aufwärmen von Frischwasser mittels Wärme von Abwasser im Sanitärbereich, zum Beispiel für eine Dusche oder Badewanne, eingerichtet sein. Das **Leitungssystem** kann als Rohrleitungssystem ausgebildet sein. Das **elastische Element** kann im Wesentlichen gasdicht ausgebildet sein. Das elastische Element kann im Wesentlichen flüssigkeitsdicht und/oder gasdicht an einem Anschlussstück anliegen. Zum Beispiel kann das elastische Element so angeordnet sein, dass es an andere Bauteile der Vorrichtung und/oder eines Wärmetauschers angepresst ist. Dieses Anpressen kann durch die Elastizität, die Eigenspannung des elastischen Elementes und/oder weitere Elemente (z.B. eine Bride) realisiert werden.

In Ausführungsformen kann das elastische Element als **Membran** ausgebildet sein. Die **Signalisierungseinheit** kann als elektronische Signalisierungseinheit ausgebildet sein.

Die Signalisierungseinheit kann ein Bauteil zur Erzeugung eines akustischen Signals aufweisen.

Das **akustische Signal** kann durch die mechanische Deformation des elastischen Elementes aktivierbar sein.

In den Hohlraum einfliessende Leckflüssigkeit kann den Druck in dem Hohlraum erhöhen und die mechanische Deformation kann durch diese Druckerhöhung hervorbringbar sein. Das elastische Element kann durch die Leckflüssigkeit selber und/oder durch diese verursachte Luftverdrängung deformierbar sein. Der Hohlraum kann mit einem Zwischenraum eines doppelwandigen Leitungssystems verbindbar sein, so dass, wenn der Hohlraum mit dem Zwischenraum verbunden ist, im Fall eines Lecks Leckflüssigkeit und/oder verdrängte Luft aus dem Zwischenraum in den Hohlraum gelangen kann.

In Ausführungsformen weist die Vorrichtung zur Detektion und Signalisierung eines Lecks einen elektrischen Stromkreislauf auf. Durch die mechanische Deformation des elastischen Elementes kann eine Schliessung eines elektrischen Stromkreislaufes, insbesondere mittels eines Schalters, auslösbar sein. Durch die Schliessung des elektrischen Stromkreislaufes kann die Signalisierungseinheit aktivierbar sein. Der elektrische Stromkreislauf kann in der Signalisierungseinheit angeordnet sein.

In Ausführungsformen weist die Vorrichtung zur Detektion und Signalisierung eines Lecks ein magnetfeldempfindliches Element und ein magnetisches Element auf. Die Vorrichtung kann so ausgebildet sein, dass durch die mechanische Deformation des elastischen Elementes eine räumliche Relativposition zwischen dem magnetfeldempfindlichen Element und dem magnetischen Element änderbar ist und durch die Änderung der räumlichen Relativposition die Signalisierungseinheit aktivierbar ist. Das magnetische Element kann ein Permanentmagnet sein.

In Ausführungsformen ist das magnetfeldempfindliche Element als magnetisch betätigbarer Schalter ausgebildet. Durch die mechanische Deformation des elastischen Elementes kann eine Schliessung eines elektrischen Stromkreislaufes auslösbar sein. Der magnetisch betätigbare Schalter kann als Reed-Kontakt ausgebildet sein.

In Ausführungsformen kann der Schalter zum Schliessen des elektrischen Stromkreislaufes mechanisch betätigbar sein. Zum Beispiel kann durch die mechanische Deformation des elastischen Elementes ein mit dem elastischen Element mechanisch verbundener Kontakt gegen einen anderen Kontakt gedrückt werden, wodurch ein elektrischer Stromkreislauf geschlossen wird.

In Ausführungsformen weist die Signalisierungseinheit einen integrierten Schaltkreis (abgekürzt auch "IC" genannt) auf. Der integrierte Schaltkreis kann programmierbar sein.

In Ausführungsformen ist das akustische Signal der Signalisierungseinheit elektronisch erzeugbar. Die Vorrichtung zur Detektion und Signalisierung eines Lecks kann eine Batterie zur Versorgung der Signalisierungseinheit mit elektrischer Energie aufweisen.

In Ausführungsformen ist die Signalisierungseinheit dazu eingerichtet, ein akustisches Signal mit variierender Frequenz zu erzeugen. Eine variierende Frequenz hat den Vorteil, dass sie durch einen Benutzer leichter wahrnehmbar sein kann.

In Ausführungsformen ist die Signalisierungseinheit dazu eingerichtet, ein akustisches Signal mit Unterbrechungen (respektive Pausen), insbesondere mit der Zeit länger werdenden Unterbrechungen, zu erzeugen. Unterbrechungen können den Verbrauch von Energie zur Erzeugung des akustischen Signals verringern. Dadurch kann die Dauer der Versorgung der Signalisierungseinheit mit elektrischer Energie aus einer Batterie verlängert werden. Dadurch kann bei derselben Kapazität der Batterie das akustische Signal über einen längeren Zeitraum hinweg immer wieder ausgesendet werden. Das ist zum Beispiel vorteilhaft, wenn der Besitzer während der Entstehung des Lecks im Urlaub ist.

Der **Wärmetauscher** mit einem doppelwandigen Leitungssystem zum Aufwärmen von Frischwasser mittels Wärme von Abwasser im Sanitärbereich weist eine zuvor beschriebene Vorrichtung zur Detektion und Signalisierung eines Lecks auf. Der Wärmetauscher kann insbesondere zum Einsatz in einer Dusche oder Badewanne ausgebildet sein. Das doppelwandige Leitungssystem kann als doppelwandiges Rohrleitungssystem ausgebildet sein.

In Ausführungsformen weist der Wärmetauscher einen Hohlraum auf,
- wobei das elastische Element zumindest einen Teil der Begrenzung des Hohlraums bildet,
- wobei, im Fall eines Lecks in dem doppelwandigen Leitungssystem, Leckflüssigkeit und/oder verdrängte Luft in den Hohlraum leitbar ist, und
- wobei die mechanische Deformation des elastischen Elementes durch in den Hohlraum einströmende Leckflüssigkeit und/oder verdrängte Luft hervorbringbar ist.

In Ausführungsformen wird ein elektrischer Stromkreis geschlossen, wenn der Überdruck in dem Hohlraum 10 mbar, insbesondere 20 mbar oder 50 mbar, überschreitet. Überdruck bezeichnet in diesem Zusammenhang einen Druck über dem Atmosphärendruck.

In Ausführungsformen beträgt der Abstand zwischen einer Ruheposition und einer Schaltposition des magnetischen Elementes mindestens 2 mm, insbesondere mindestens 3 mm oder mindestens 3,5 mm oder mindestens 5 mm.

In Ausführungsformen ist das elastische Element dazu eingerichtet, um als Überdruckventil zu wirken. Das elastische Element kann aufgrund seiner Ausgestaltung und/oder seiner Anordnung als Überdruckventil eingerichtet sein. Zum Beispiel kann ein Randbereich des elastischen Elementes bis zu einem gewissen Überdruck an andere Bauteile angepresst sein und dazu eingerichtet sein, dass - ab der Überschreitung eines gewissen Überdrucks in dem Hohlraum - sich der Randbereich des elastischen Elementes von dem Bauteil - zumindest teilweise - ablöst. Dadurch wird der Hohlraum geöffnet und Flüssigkeit und/oder Gas (allgemeiner ausgedrückt: Druck) kann aus dem Hohlraum entweichen.

In Ausführungsformen ist das elastische Element dazu eingerichtet ab einem Überdruck in dem Hohlraum von mindestens 100 mbar, insbesondere ab einem Überdruck von mindestens 120 mbar oder von mindestens 150 mbar, Flüssigkeit und/oder Gas aus dem Hohlraum abzulassen.

In Ausführungsformen weist die Signalisierungseinheit Bauteile auf, welche dazu eingerichtet sind die für die Aktivierung der Signalisierungseinheit nötige mechanische Deformation zu behindern, insbesondere im Normalbetrieb zu verhindern. Normalbetrieb heisst in diesem Zusammenhang Betrieb ohne Leck. Zum Beispiel kann die Signalisierungseinheit zwei als Stege ausgeführte Bauteile aufweisen, welche dazu eingerichtet sind, wenn sich keine Flüssigkeit in dem Hohlraum befindet, das elastische Element von bestimmten Bauteilen der Signalisierungseinheit (beispielsweise von einem Schalter) zu beabstanden.

In Ausführungsformen ist die Signalisierungseinheit durch eine Spannkraft des elastischen Elementes in Betriebsposition gehalten. Zum Beispiel kann die Signalisierungseinheit von dem elastischen Element gegen Teile des Wärmetauschers gedrückt sein und dadurch stabil positioniert sein. Zur stabilen Positionierung können das elastische Element und/oder der Wärmetauscher Positionierungselemente aufweisen, welche eingerichtet sind ein Verrutschen der Signalisierungseinheit zu behindern.

In Ausführungsformen weist der Wärmetauscher eine optische Signalisierungseinheit auf.
- Die optische Signalisierungseinheit kann Teil der Signalisierungseinheit zur Erzeugung eines akustischen Signals sein oder ein davon separiertes Bauteil sein.
- Das optische Signal der optischen Signalisierungseinheit kann das akustische Signal ergänzen.
- Das optische Signal kann zurücksctzbar sein.
- Das optische Signal kann so angeordnet sein, dass es, von ausserhalb des Wärmetauschers, nur sichtbar ist, wenn Teile des Wärmetauschers - im Vergleich zum Normalbetrieb - verschoben und/oder demontiert worden sind.
- Das optische Signal kann - insbesondere in einem aktivierten Zustand - in/an einem Sichtfenster eines Bauteils des Wärmetauschers angeordnet sein.

In Ausführungsformen ist die optische Signalisierungseinheit dazu eingerichtet ein bi-stabiles optisches Signal zu erzeugen, wobei das bi-stabile optische Signal durch die mechanische Deformation des elastischen Elementes aktivierbar ist. Ein bi-stabiles optisches Signal ist ein optisches Signal welches sich entweder in einem aktivierten Zustand oder in einem nicht aktivierten Zustand befindet, wobei die Änderung von dem einen Zustand in den anderen Zustand einer Einflussnahme, zum Beispiel einer Krafteinwirkung, bedarf.

In Ausführungsformen ist das bi-stabile optische Signal durch eine mechanische Deformation eines Anzeigeelementes (zum Beispiel ein ausstülpbares und/oder verschiebbares Bauteil) aktivierbar. Das Anzeigeelement kann Teil eines an ein Anschlussstück anliegenden elastischen Elementes sein.

In Ausführungsformen ist der Wärmetauscher so eingerichtet, dass durch eine Krafteinwirkung auf
- die Vorrichtung und/oder
- einen Teil der Vorrichtung und/oder
- einen anderen Teil des Wärmetauschers
das akustische Signal der Signalisierungseinheit aktivierbar ist.

Insbesondere kann der Wärmetauscher zur Durchführung eines manuell auslösbaren Selbsttests der Vorrichtung eingerichtet sein. Dadurch ist die Funktionsfähigkeit der Vorrichtung und/oder die Ladung einer Batterie testbar, ohne ein künstliches Leck herbeiführen zu müssen. Zum Beispiel ist der Wärmetauscher so eingerichtet, dass die Signalisierungseinheit (beispielsweise mit Hilfe eines Schraubenziehers) gegen das elastische Element drückbar ist und dadurch die Signalisierungseinheit aktivierbar ist. In einem anderen Beispiel ist der Wärmetauscher dazu eingerichtet, dass die Signalisierungseinheit durch ein Drücken gegen einen elastischen Teil der Aussenhülle des Hohlraumes aktivierbar ist, wobei die Druckkraft über den Luftdruck in dem Hohlraum übertragen wird und so die mechanische Deformation des elastischen Elementes hervorruft.

Ein zweiter, nicht beanspruchter Aspekt betrifft eine Vorrichtung zur Detektion und Signalisierung eines Lecks, aufweisend
- eine Führung zur Lenkung von Leckflüssigkeit
- und eine Signalisierungseinheit,
   wobei
- die Signalisierungseinheit dazu eingerichtet ist, ein akustisches Signal zu erzeugen, und
- wobei die Führung zur Lenkung von Leckflüssigkeit so eingerichtet ist, dass die Signalisierungseinheit durch eine Druckkraft, eine Gewichtskraft und/oder eine kinetische Energie der gelenkten Leckflüssigkeit aktivierbar und/oder betreibbar ist.

Die Signalisierungseinheit kann als mechanische Signalisierungseinheit ausgebildet sein.

In Ausführungsformen des zweiten Aspekts weist die Führung ein Ventil, insbesondere ein Überdruckventil, zum Beispiel ein sogenanntes Duck-Bill-Valve, auf. Der Einsatz eines Ventils kann sicherstellen, dass die Leckflüssigkeit - zumindest an einigen Stellen der Vorrichtung - mit einem gewissen Mindestdruck fliesst und/oder auftrifft.

In Ausführungsformen des zweiten Aspekts ist ein doppelwandiges Leitungssystem dazu eingerichtet - im Falle eines Lecks - Leckflüssigkeit zunächst durch einen Zwischenraum zwischen den beiden Wänden und von dort aus in einen Hohlraum zu führen. In dem Hohlraum kann eine mechanische Signalisierungseinheit angeordnet sein, welche durch die Druckkraft und/oder Gewichtskraft der in den Hohlraum gelenkten Leckflüssigkeit aktivierbar und/oder betreibbar ist.

In Ausführungsformen des zweiten Aspekts ist eine mechanische Signalisierungscinheit als drehbare Trommel ausgebildet, in deren Inneren Kugeln liegen. Die Trommel kann, beispielsweise durch auf der Trommeloberfläche oder an der Drehachse angeordnete Flügel, von der Leckflüssigkeit in Drehung versetzt werden, wodurch die im Inneren gelagerten Kugeln gegen die Trommclwand bzw. gegeneinander schlagen und so ein akustisches Signal erzeugen.

In Ausführungsformen des zweiten Aspektes sind in einem Gehäuse Kugeln oder andere Objekte gelagert, wobei in das Gehäuse gelenkte Leckflüssigkeit die Kugeln oder die anderen Objekte mechanisch anregen kann und durch die mechanische Anregung ein akustisches Signal - zum Beispiel durch das Schlagen der Kugeln oder der anderen Objekte gegen die Gehäusewand bzw. gegeneinander - erzeugt wird.

In Ausführungsformen des zweiten Aspekts ist eine mechanische Signalisierungseinheit als - durch Leckflüssigkeit antreibbares - Turbinenrad ausgebildet, welches zur Erzeugung von akustischen Signalen eingerichtet ist. Das Turbinenrad kann einen Exzenter und/oder einen Generator antreiben. Der Generator kann dazu eingerichtet sein eine elektrische Signalisierungseinheit oder einen Akkumulator einer elektrischen Signalisierungseinheit zu speisen.

In Ausführungsformen des zweiten Aspekts ist eine mechanische Signalisierungseinheit als sogenannter "Hydrohammer" ausgebildet. Dabei ist ein in einem Querschnitt gesehen ankerförmiges Bauteil - auch "Anker genannt" - schwenkbar gelagert und so ausgebildet ist, dass es im Wesentlichen zwei Konfigurationen einnehmen kann. Bei einer ersten Konfiguration ist der Anker an der Schwenklagerung so geschwenkt, dass die gelenkte Leckfüssigkeit primär in bzw. auf eine erste Flunke gelenkt wird. Bei einer zweiten Konfiguration ist der Anker an der Schwenklagerung so geschwenkt, dass die gelenkte Leckfüssigkeit primär in bzw. auf eine zweite Flunke gelenkt wird. Ein Wechsel zwischen den beiden Konfigurationen wird durch ein Schwenken des Ankers entlang der Schwenklagerung realisiert. Die Lenkung der Flüssigkeit in die jeweilige Flunke kann durch einen, im Wesentlichen senkrecht zu den Ankerflunken liegenden, Schaft begünstigt werden. Der Hydrohammer ist so ausgebildet, dass im Fall eines Lecks die gelenkte Leckfüssigkeit zunächst primär in bzw. auf eine erste Flunke gelenkt wird. Durch die Druckkraft und/oder Gewichtskraft der Leckflüssigkeit schwenkt der Anker an der Schwenklagerung in die zweite Konfiguration um, so dass die Leckflüssigkeit nun in die zweite Flunke gelenkt wird. Der Hydrohammer kann so ausgebildet und/oder angeordnet sein, dass durch fortwährend einströmende Leckflüssigkeit der Anker wiederholt hin- und hergeschwenkt wird. Der Hydrohammer kann so eingerichtet sein, dass bei dem Schwenken Teile des Ankers oder mit dem Anker verbundene Teile gegen andere Bauteile, zum Beispiel Klangkörper, schlagen und dadurch ein akustisches Signal erzeugen. Diese anderen Bauteile können zudem als Begrenzung für die Schwenkung des Ankers dienen und/oder zur Realisierung der beiden Konfigurationen beitragen.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Wärmetauscher mit einem doppelwandigen Rohrleitungssystem und einer Vorrichtung zur Detektion und Signalisierung eines Lecks mit einem magnetischen Element in einer Ruheposition;
- Figur 2: den Wärmetauscher aus Figur 1 mit dem magnetischen Element in einer Schaltposition;
- Figur 3: einen elektrischen Stromkreislauf mit einer elektrischen Signalisierungseinheit und einem magnetisch betätigbaren Schalter.
- Figur 4: Signalisierungseinheit in Form einer drehbaren Trommel
- Figur 5a, 5b: Signalisierungseinheit in Form eines Hydro-Hammers
- Figur 6a, 6b: Optische Signalisierungseinheit mit einem verschiebbaren Bauteil.
- Figur 7a, 7b: Optische Signalisierungseinheit mit einem ausstülpbaren Bauteil.

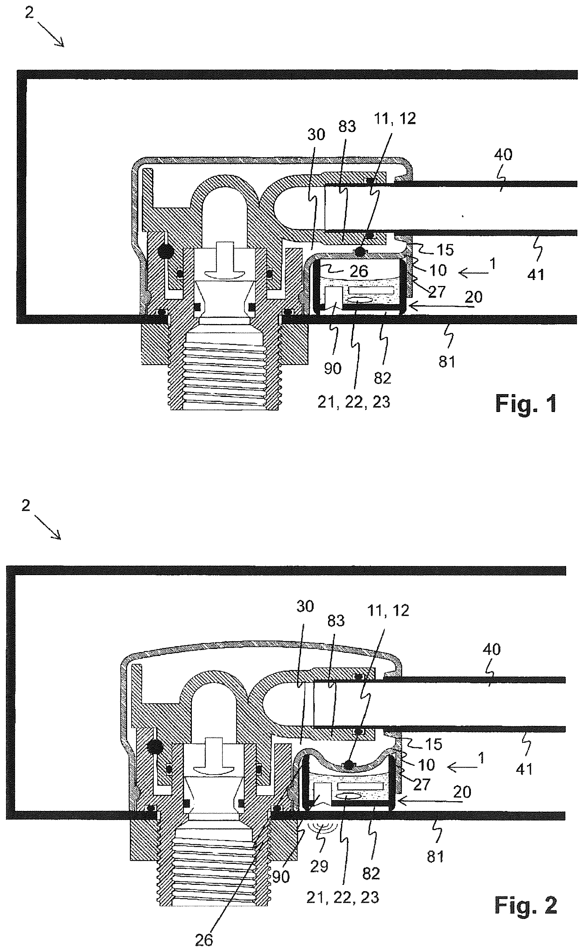

**Figur 1** zeigt einen Ausschnitt eines Wärmetauschers 2 zum Aufwärmen von Frischwasser mittels Wärme von Abwasser im Sanitärbereich, zum Beispiel für eine Dusche oder Badewanne. Der Wärmetauscher 2 weist eine Vorrichtung 1 zur Detektion und Signalisierung eines Lecks auf, welche ein elastisches Element 10 und eine Signalisierungseinheit 20 aufweist. Die Signalisierungseinheit 20 weist ein Bauteil 90 zur elektronischen Erzeugung eines akustischen Signals auf.

Der Wärmetauscher 2 weist ferner einen, an ein doppelwandiges Leitungssystem 40 angrenzenden, Hohlraum 30 auf, der teilweise durch das elastisches Element 10 begrenzt wird. Das elastische Element 10 ist im Wesentlichen flüssigkeitsdicht ausgebildet und kann zum Beispiel aus Gummi oder einem anderen elastischen Kunststoff bestehen. Das elastische Element 10 weist ein magnetisches Element 11 (das heisst es ist mit einem magnetischen Element 11 verbunden) auf, welches als Permanentmagnet 12 ausgebildet sein kann.

Die Signalisierungseinheit 20 wird von dem elastischen Element 10 an eine Wand 81 des Wärmetauschers 2 gedrückt und dadurch positioniert. Die Signalisierungseinheit 20 weist einen magnetisch betätigbaren Schalter 22 auf, der einen elektrischen Stromkreislauf 24 schliessen kann. Der magnetisch betätigbare Schalter 22 kann ein magnetempfindliches Element 21 aufweisen und als sogenannter Reed-Kontakt 23 ausgebildet sein. In Richtung des magnetischen Elements 11 weist die Signalisierungseinheit 20 als Stege ausgebildete Bauteile 26, 27 auf, welche im Normalbetrieb das elastisches Element 10 - und dadurch insbesondere das magnetisches Element 11 - auf Abstand zu dem magnetisch betätigbaren Schalter 22 halten. In der Ruheposition (also im Normalbetrieb) beträgt der Abstand zwischen dem magnetisches Element 11 und dem magnetisch betätigbaren Schalter 22 zum Beispiel 6 mm.

**Figur 2** zeigt den Ausschnitt des Wärmetauschers 2 aus Figur 1 in Falle eines Lecks in einer Wand des Leitungssystems 40. Leckflüssigkeit und/oder verdrängte Luft wird über einen Zwischenraum 41 zwischen den beiden Wänden des Leitungssystems 40 in den Hohlraum 30 geleitet, wodurch in dem Hohlraum 30 ein Überdruck entsteht.

Durch den Überdruck in dem Hohlraum 30 wurde das elastische Element 10 mechanisch deformiert und das magnetische Element 11 - an den beabstandenden Bauteilen 26, 27 des Signalisierungseinheit 20 vorbei - in Richtung des magnetisch betätigbaren Schalters 22 gedrückt.

Sobald der Abstand zwischen dem magnetischen Element 11 und dem magnetisch betätigbaren Schalter 22 einen Schwellenwert unterschreitet, schliesst der magnetische betätigbare Schalter 22 einen elektrischen Stromkreislauf 24, wodurch die Signalisierungseinheit 20 aktiviert wird und ein akustisches Signal 29 erzeugt. In der Praxis kann der Schwellenwert des Abstandes z. B. 3 mm betragen und bei einem Überdruck in dem Hohlraum 30 von z. B. 20 mbar erreicht werden.

Sobald sich der Druck in der Hohlraum 30 verringert, zum Beispiel weil das Leck behoben wurde oder das Wasser abgedreht wurde, verringert sich auch die mechanische Deformation des elastischen Elementes 10. Dadurch entfernt sich das magnetische Element 11 von dem magnetisch betätigbaren Schalter 22 und ab einem gewissen Abstand wird der elektrische Stromkreislauf 24 erneut unterbrochen, wodurch die Signalisierungseinheit 20 deaktiviert wird und das akustische Signal 29 endet. Der Ausschnitt des Wärmetauschers 2 ist nun wieder in dem in Figur 1 gezeigten Zustand und die Vorrichtung 1 ist erneut zum Detektieren und Signalisieren eines Lecks bereit.

In Randbereichen 15 ist das elastische Element 10 durch seine Eigenspannung an andere Bauteile des Wärmetauschers 2 angepresst. Bis zu einem gewissen Überdruck dichtet das elastische Element 10 an den Randbereichen 15 den Hohlraum 30 ausreichend ab, so dass Flüssigkeit und/oder Gas aus dem Hohlraum 30 im Wesentlichen nicht entweichen können. Wie oben beschrieben wird ab einem ersten Überdruck die Signalisierungseinheit 20 aktiviert. Wenn das Leck nicht behoben wird, steigt der Druck in dem Hohlraum 30 mit der Zeit eventuell weiter an. In dieser Situation wirkt das elastische Element 10 als Überdruckventil: ab einem zweiten Überdruck, dieser kann in der Praxis z. B. bei 120 mbar liegen, wird das elastische Element 10 so starken Kräften ausgesetzt, dass es sich an einem der Randbereiche 15 von den anderen Bauteilen des Wärmetauschers 2, z. B. dem Leitungssystem 40, ablöst. Dadurch kann der Überdruck aus dem Hohlraum 30 abgelassen werden. Dadurch werden Schäden am elastischen Element 10 verhindert.

Die gezeigte Signalisierungseinheit 20 ist so ausgebildet, dass, wenn sie von dem elastischen Element 10 an die Wand 81 des Wärmetauschers 2 gedrückt wird, ein Spalt 82 zwischen der Signalisierungseinheit 20 und der Wand 81 verbleibt. In diesen kann zum Beispiel die Spitze eines Schraubenziehers eingeführt und über die Spitze des Schraubenziehers Kraft gegen die Signalisierungseinheit 20 ausgeübt werden. Die resultierende Verschiebung der Signalisierungseinheit 20 überträgt sich über die Stege 26, 27 auf das elastische Element 10, wodurch dieses zusammen mit der Signalisierungseinheit 20 verschoben wird. Auswölbungen 83 an einem Teil des Innenraums des Hohlraums 30 verhindern, dass sich das an dem elastischen Element 10 befestigte magnetische Element 11 mit dem elastischen Element 10 mitbewegt. Bei zunehmender Kraftausübung verringert sich so der Abstand zwischen dem magnetischen Element 11 und dem magnetisch betätigbaren Schalter 22. Bei einem ausreichend kleinen Abstand aktiviert sich die Signalisierungseinheit 20. Ein Benutzer kann so auf eine einfach Weise die Funktionsfähigkeit der Vorrichtung 1 bzw. der Signalisierungseinheit 20 testen.

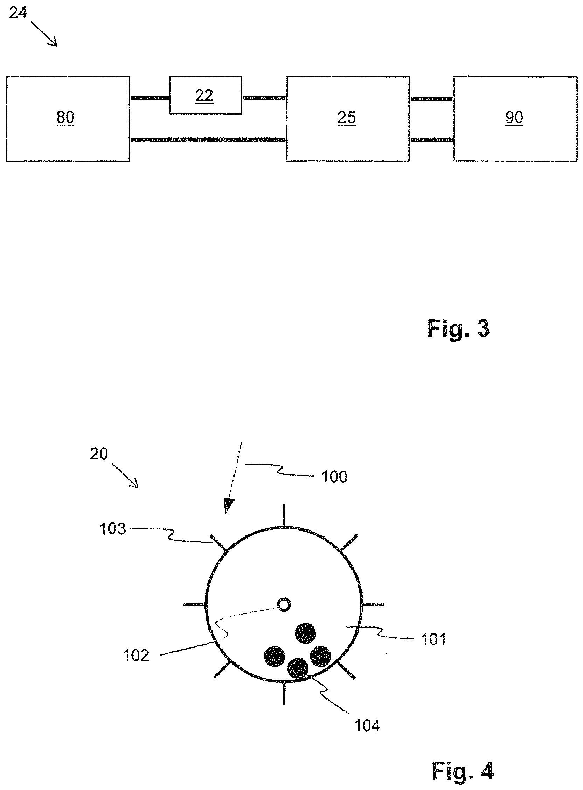

**Figur 3** zeigt einen elektrischen Stromkreislauf 24 mit einem Schalter 22. Der Stromkreislauf 24 kann zum Beispiel in einer Signalisierungseinheit 20 der Vorrichtung 1 angeordnet sein. Bei geschlossenem Schalter 22 ist eine - zum Beispiel als Batterie ausgebildete - Energiequelle 80 mit einem Bauteil 90 zur elektronischen Erzeugung eines akustischen Signals verbunden, wodurch diese ein akustisches Signal 29 erzeugt. Wenn der Schalter 22 nicht geschlossen ist, ist der elektrische Stromkreislauf 24 unterbrochen und kein akustisches Signal 29 wird erzeugt. Der Schalter 22 kann magnetisch und/oder mechanisch aktivierbar sein.

Optional weist der elektrische Stromkreislauf 24 einen integrierten Schaltkreis 25 (abgekürzt auch "IC" genannt) auf, welcher programmierbar sein kann. Der integrierte Schaltkreis 25 kann so eingerichtet sein, dass das Bauteil 90 zur elektronischen Erzeugung eines akustischen Signals bei geschlossenem Schalter 22 ein akustisches Signal 29 mit variierender Frequenz und/oder mit Unterbrechungen (respektive Pausen) erzeugt.

**Figur 4** zeigt eine Signalisierungseinheit 20 gemäss dem zweiten, nicht beanspruchten Aspekt. Die Signalisierungseinheit 20 ist als drehbare Trommel 101 ausgebildet. Die Trommel 101 ist drehbar um eine Drehachse 102 gelagert. Im deren Inneren der Trommel 101 sind Kugeln 104 gelagert sind. An der Oberfläche der Trommel 101 sind Flügel 103 angeordnet. Der Pfeil 100 zeigt die Richtung der gelenkten Leckflüssigkeit im Fall eines Lecks. Die Leckflüssigkeit ist so gelenkt, dass sie die Flügel 103 trifft und dadurch die Trommel 101 - ähnlich einem Wasserrad - in Drehung versetzt. Durch die Drehung schlagen die im Inneren der Trommel 101 gelagerten Kugeln 103 gegeneinander und/oder gegen die Innenwand der Trommel 101, wodurch ein akustisches Signal erzeugt wird.

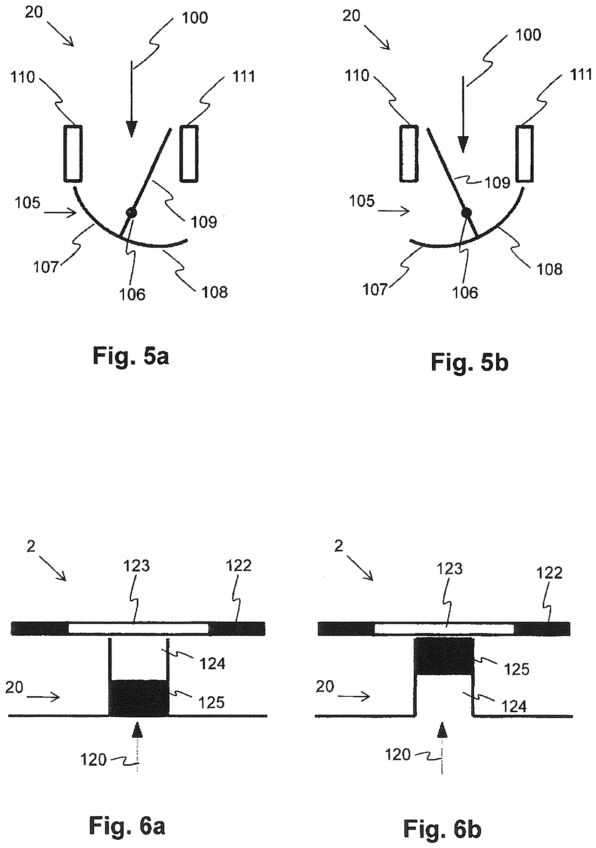

**Figur 5a** zeigt eine Signalisierungseinheit 20 gemäss dem zweiten Aspekt. Die Signalisierungseinheit 20 ist als sogenannter "Hydrohammer" ausgebildet: Ein Anker 105 mit einem Schaft 109 und zwei Flunken 107, 108 ist an einer Schwenklagerung 106 schwenkbar gelagert. Der Pfeil 100 zeigt die Richtung der gelenkten Leckflüssigkeit im Fall eines Lecks. Aufgrund der Anordnung des Schaftes 109 wird im Fall eines Lecks die Leckflüssigkeit primär in eine erste Flunke 107 gelenkt. Durch die Druckkraft und/oder Gewichtskraft der Leckflüssigkeit schwenkt der Anker 105 an seiner Schwenklagerung 106 um. **Figur 5b** zeigt den Anker 105 nach dem Umschwenken. Der Schaft 109 ist nun so angeordnet, dass die

Leckflüssigkeit primär in eine zweite Flunke 108 gelenkt wird. Bei fortlaufender Einwirkung der Leckflüssigkeit wird der Anker 105 wiederholt hin- und hergeschwenkt. Beim Schwenken stossen Teile des Ankers - zum Beispiel die Flunken 107, 108 und/oder der Schaft 109 - oder mit dem Anker verbundene Teile gegen andere Bauteile 110, 111, wodurch ein akustisches Signal erzeugt wird. Die Bauteile 110, 111 können zum Beispiel als Klangkörper ausgebildet sein und/oder zur Beschränkung der Schwenkbarkeit des Ankers 105 eingerichtet sein.

**Figur 6a** zeigt einen Ausschnitt eines Wärmetauschers 2 mit einer Signalisierungseinheit 20 zur optischen Signalisierung. Eine Signalisierungseinheit 20 zur optischen Signalisierung kann eine Signalisierungseinheit 20 zur akustischen Signalisierung ersetzen und/oder ergänzen. Die Signalisierungseinheit 20 weist ein als verschiebbares Bauteil 125 ausgebildetes Anzeigeelement auf. Das verschiebbare Bauteil 125 ist in einem Schacht 124 angeordnet, welcher an einem Sichtfenster 123 in einem Rahmen 122 des Wärmetauschers 2 angeordnet ist. Das Sichtfenster 123 kann an einem Ende des Schachtes 124 (wie in der Figur gezeigt) oder an einer anderen Position (zum Beispiel an einer Seite des Schachtes 124) angeordnet sein. Der Pfeil 120 zeigt die Kraftwirkung der Leckflüssigkeit im Fall eines Lecks. **Figur 6b** zeigt die Signalisierungseinheit 20 im Fall eines Lecks. Durch die Kraftwirkung der Leckflüssigkeit ist das verschiebbare Bauteil 125 entlang des Schachts verschoben. Das verschiebbare Bauteil 125 kann eine auffällige Signalfarbe aufweisen, so dass es durch das Sichtfenster 123 hindurch leicht wahrgenommen werden kann.

Die Kraftwirkung kann direkt durch die Leckflüssigkeit selber oder indirekt, zum Beispiel durch das das elastische Element 10 oder durch ein ausstülpbares Bauteil 121 (beide in Figur 6a und 6b nicht gezeigt), übertragen werden.

Optional kann das verschiebbare Bauteil 125 und der Schacht 124 so ausgestaltet sein, dass das verschiebbare Bauteil 125 zumindest im an dem Sichtfenster 123 gelegenem Teil des Schachtes 124 reibschlüssig an zumindest einigen Wänden des Inneren des Schachtes 124 gelagert ist. In einem solchen Fall ist ein gewisser Druck nötig, um das verschiebbare Bauteil 125 entlang des Schachts 124 zu verschieben. Damit einhergehend ist ein gewisser Druck nötig, um das verschiebbare Bauteil 125 wieder entlang des Schachts 124 zurückzuschieben. Dadurch kann diese optische Signalisierungseinheit 20 als semi-permanente Anzeige dienen. Mit anderen Worten kann diese optische Signalisierungseinheit 20 auch nach einem Druckabfall anzeigen, dass es ein Leck gegeben hat. Eine solche Ausführungsform ist ein Beispiel für eine optische Signalisierungseinheit 20 mit einem bi-stabilen optischen Signal. Gleichwohl kann das verschiebbare Bauteil 125 zum Beispiel manuell wieder zurückgeschoben werden, um so erneut zur Detektion und optischen Signalisierung eines Lecks eingerichtet zu sein.

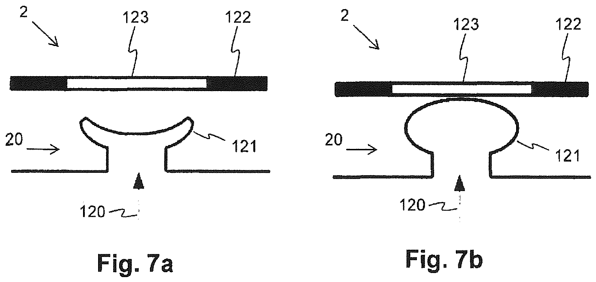

**Figur 7a** zeigt einen Ausschnitt eines Wärmetauschers 2 mit einer Signalisierungseinheit 20 zur optischen Signalisierung. Die Signalisierungseinheit 20 weist ein als ausstülpbares Bauteil 121 ausgebildetes Anzeigeelement auf. Das ausstülpbare Bauteil 121 ist im gezeigten Beispiel an einem Sichtfenster 123 in einem Rahmen 122 des Wärmetauschers 2 angeordnet. Der Pfeil 120 zeigt die Kraftwirkung der Leckflüssigkeit im Fall eines Lecks. **Figur 7b** zeigt die Signalisierungseinheit 20 im Fall eines Lecks. Durch die Kraftwirkung der Leckflüssigkeit ist das ausstülpbare Bauteil 121 ausgestülpt. Das ausstülpbare Bauteil 121 kann eine auffällige Signalfarbe aufweisen, so dass es durch das Sichtfenster 123 hindurch leicht wahrgenommen werden kann. Diese Ausführungsform ist ein Beispiel für eine optische Signalisierungseinheit 20 mit einem bi-stabilen optischen Signal.

## Patentansprüche

1. Vorrichtung (1)
• zur Detektion und Signalisierung eines Lecks
▪ in einem doppelwandigen Leitungssystem (40) eines Wärmetauschers (2) zum Aufwärmen von Frischwasser mittels Wärme von Abwasser im Sanitärbereich, durch Detektion von Leckflüssigkeit, welche im Fall eines Lecks aus einem Zwischenraum in einen Hohlraum (30) gelangen kann,
aufweisend
• ein **elastisches Element** (10)
• und eine Signalisierungseinheit (20), wobei
• die Signalisierungseinheit (20) dazu eingerichtet ist, ein akustisches Signal (29) zu erzeugen, und
• durch eine mechanische Deformation des elastischen Elementes (10) die Signalisierungseinheit (20) zu aktivieren
**dadurch gekennzeichnet, dass** die Vorrichtung aufweist:
• den Hohlraum (30), der dazu eingerichtet ist, mit einem Zwischenraum (41) des doppelwandigen Leitungssystems (40) verbunden zu werden, wobei
• das elastische Element (10) einen Teil der Begrenzung des Hohlraums (30) bildet,
• das elastische Element (10) flüssigkeitsdicht ist,
• die Vorrichtung dazu eingerichtet ist, durch in den Hohlraum (30) einfliessende Leckflüssigkeit den Druck in dem Hohlraum (30) zu erhöhen,
• und durch diese Druckerhöhung die mechanische Deformation des elastischen Elementes (10) durch in den Hohlraum (30) einfliessende Leckflüssigkeit hervorzubringen.

2. Vorrichtung (1) gemäss einem der vorstehenden Ansprüche, wobei das elastische Element (10) als Membran ausgebildet ist.

3. Vorrichtung (1) gemäss einem der vorstehenden Ansprüche, aufweisend
• ein magnetfeldempfindliches Element (21),
• ein magnetisches Element (11),
▪ insbesondere einen Permanentmagneten (12),
wobei die Vorrichtung dazu eingerichtet ist, durch die mechanische Deformation des elastischen Elementes (10) eine räumliche Relativposition zwischen dem magnetfeldempfindlichen Element (21) und dem magnetischen Element (11) zu ändern und durch die Änderung der räumlichen Relativposition die Signalisierungseinheit (20) zu aktivieren.

4. Vorrichtung (1) gemäss Anspruch 3, wobei das magnetfeldempfindliche Element (21) ein magnetisch betätigbarer Schalter (22),
▪ insbesondere ein Reed-Kontakt (23),
ist, und die Vorrichtung dazu eingerichtet ist, durch die mechanische Deformation des elastischen Elementes (10) eine Schliessung eines elektrischen Stromkreislaufes (24) auszulösen.

5. Vorrichtung (1) gemäss einem der vorstehenden Ansprüche, wobei die Signalisierungseinheit (20) einen integrierten Schaltkreis (25),
▪ insbesondere einen programmierbaren integrierten Schaltkreis (25),
aufweist.

6. Vorrichtung (1) gemäss einem der vorstehenden Ansprüche, wobei die Signalisierungseinheit (20) dazu eingerichtet ist, ein akustisches Signal (29)
• mit variierender Frequenz und/oder
• mit Unterbrechungen,
▪ insbesondere mit der Zeit länger werdenden Unterbrechungen,
zu erzeugen.

7. **Wärmetauscher** (2) mit einem doppelwandigen Leitungssystem (40) zum Aufwärmen von Frischwasser mittels Wärme von Abwasser im Sanitärbereich mit einer Vorrichtung (1) gemäss einem der vorstehenden Ansprüche,
▪ insbesondere zum Einsatz in einer Dusche oder Badewanne.

8. Wärmetauscher (2) gemäss Anspruch 7, aufweisend einen Hohlraum (30),
• wobei das elastische Element (10) einen Teil der Begrenzung des Hohlraums (30) bildet,
• wobei der Wärmetauscher (2) dazu eingerichtet ist, im Fall eines Lecks in dem doppelwandigen Leitungssystem (40), Leckflüssigkeit und/oder verdrängte Luft in den Hohlraum (30) zu leiten, und
• wobei der Wärmetauscher (2) dazu eingerichtet ist, die mechanische Deformation des elastischen Elementes (10) durch in den Hohlraum (30) einströmende Leckflüssigkeit und/oder verdrängte Luft hervorzubringen.

9. Wärmetauscher (2) gemäss einem der Ansprüche 7 bis 8, wobei ein elektrischer Stromkreis (24) geschlossen wird, wenn der Überdruck in dem Hohlraum (30) 20 mbar überschreitet.

10. Wärmetauscher (2) gemäss einem der Ansprüche 7 bis 9, wobei die Vorrichtung (1) gemäss einem der Ansprüche 4 oder 5 ausgebildet ist, und wobei der Abstand zwischen einer Ruheposition und einer Schaltposition des magnetischen Elementes (11) mindestens 2 mm beträgt.

11. Wärmetauscher (2) gemäss einem der Ansprüche 7 bis 10, wobei das elastische Element (10) dazu eingerichtet ist, um als Überdruckventil zu wirken,
▪ insbesondere wobei das elastische Element (10) dazu eingerichtet ist ab einem Überdruck in dem Hohlraum (30) von mindestens 100 mbar Flüssigkeit und/oder Gas aus dem Hohlraum (30) abzulassen.

12. Wärmetauscher (2) gemäss einem der Ansprüche 7 bis 11, wobei die Signalisierungseinheit (20) Bauteile (26, 27) aufweist, welche dazu eingerichtet sind die für die Aktivierung der Signalisierungseinheit (20) nötige mechanische Deformation zu behindern,
▪ insbesondere im Normalbetrieb, das heisst, im Betrieb ohne Leck, zu verhindern.

13. Wärmetauscher (2) gemäss einem der Ansprüche 7 bis 12, wobei die Signalisierungseinheit (20) durch eine Spannkraft des elastischen Elementes (10) in Betriebsposition gehalten ist,
▪ insbesondere wobei die Signalisierungseinheit (20) von dem elastischen Element (10) gegen Teile des Wärmetauschers (2) gedrückt ist.

14. Wärmetauscher (2) gemäss einem der Ansprüche 7 bis 13, aufweisend eine optische Signalisierungseinheit (20),
• insbesondere wobei die optische Signalisierungseinheit (20) dazu eingerichtet ist, ein bi-stabiles optisches Signal zu erzeugen, wobei ein bi-stabiles optisches Signal ein optisches Signal ist, welches sich entweder in einem aktivierten Zustand oder in einem nicht aktivierten Zustand befindet, wobei die Änderung von dem einen Zustand in den anderen Zustand einer Einflussnahme bedarf, und wobei die optische Signalisierungseinheit (20) dazu eingerichtet ist, das bi-stabile optische Signal durch die mechanische Deformation des elastischen Elementes zu aktivieren,
▪ insbesondere dazu, eine weitere mechanische Deformation durch die mechanische Deformation zu erzeugen und das bi-stabile optische Signal durch die weitere mechanische Deformation zu aktivieren.

15. Wärmetauscher (2) gemäss einem der Ansprüche 7 bis 14, wobei der Wärmetauscher (2) dazu eingerichtet ist, durch eine Krafteinwirkung auf
• die Vorrichtung (1) und/oder
• einen Teil der Vorrichtung (1) und/oder
• einen anderen Teil des Wärmetauschers (2)
das akustische Signal (29) der Signalisierungseinheit (20) zu aktivieren,
▪ insbesondere wobei der Wärmetauscher (2) zur Durchführung eines manuell auslösbaren Selbsttests der Vorrichtung (1) zum Test der Funktionsfähigkeit der Vorrichtung und/oder der Ladung einer Batterie, ohne ein künstliches Leck herbeiführen zu müssen, eingerichtet ist.

## Claims

1. Device (1)
- for detecting and signalling a leak
in a double-walled pipe system (40) of a heat exchanger (2) for heating fresh water by means of heat from waste water in the sanitary area, by detecting leakage liquid which, in the event of a leak, can escape from an intermediate space into a cavity (30),
comprising
- an elastic element (10)
- and a signalling unit (20), wherein
- the signalling unit (20) is set up to generate an acoustic signal (29), and
- to activate the signalling unit (20) by a mechanical deformation of the elastic element (10)
**characterised in that** the device comprises
- the cavity (30) adapted to be connected to an intermediate space (41) of the double-walled pipe system (40),
wherein
- the elastic element (10) forms part of the boundary of the cavity (30),
- the elastic element (10) is liquid-tight,
- the device is designed to increase the pressure in the cavity (30) by leakage fluid flowing into the cavity (30),
- and by this increase in pressure to bring about the mechanical deformation of the elastic element (10) by leakage fluid flowing into the cavity (30).

2. Device (1) according to one of the preceding claims, wherein the elastic element (10) is designed as a membrane.

3. Device (1) according to one of the preceding claims, comprising
- a magnetic field-sensitive element (21),
- a magnetic element (11),
in particular a permanent magnet (12),
wherein the device is adapted to change a spatial relative position between the magnetic field-sensitive element (21) and the magnetic element (11) by the mechanical deformation of the elastic element (10) and to activate the signalling unit (20) by the change of the spatial relative position.

4. Device (1) according to claim 3, wherein the magnetic field-sensitive element (21) is a magnetically actuable switch (22),
in particular a reed contact (23),
and the device is set up to trigger a closure of an electrical circuit (24) by the mechanical deformation of the elastic element (10).

5. Device (1) according to one of the preceding claims, wherein the signalling unit (20) comprises an integrated circuit (25),
in particular a programmable integrated circuit (25).

6. Device (1) according to one of the preceding claims, wherein the signalling unit (20) is arranged to emit an acoustic signal (29)
- with varying frequency and/or
- with interruptions,
in particular with interruptions that become longer over time.

7. Heat exchanger (2) with a double-walled pipe system (40) for heating fresh water by means of heat from waste water in the sanitary area with a device (1) according to one of the preceding claims,
in particular for use in a shower or bathtub.

8. Heat exchanger (2) according to claim 7, comprising a cavity (30),
- wherein the elastic element (10) forms part of the boundary of the cavity (30),
- wherein the heat exchanger (2) is arranged to direct leakage fluid and/or displaced air into the cavity (30) in the event of a leak in the double-walled pipe system (40), and
- wherein the heat exchanger (2) is arranged to bring about the mechanical deformation of the elastic element (10) by leakage fluid and/or displaced air flowing into the cavity (30).

9. Heat exchanger (2) according to any one of claims 7 to 8, wherein an electrical circuit (24) is closed when the overpressure in the cavity (30) exceeds 20 mbar.

10. Heat exchanger (2) according to one of claims 7 to 9, wherein the device (1) is designed according to one of claims 4 or 5, and wherein the distance between a rest position and a switching position of the magnetic element (11) is at least 2 mm.

11. Heat exchanger (2) according to any one of claims 7 to 10, wherein the resilient element (10) is arranged to act as a pressure relief valve,
in particular wherein the elastic element (10) is arranged to release liquid and/or gas from the cavity (30) from an overpressure in the cavity (30) of at least 100 mbar.

12. Heat exchanger (2) according to one of claims 7 to 11, wherein the signalling unit (20) comprises components (26, 27) which are arranged to impede the mechanical deformation necessary for the activation of the signalling unit (20),
in particular in normal operation, i.e. in operation without leakage.

13. Heat exchanger (2) according to one of claims 7 to 12, wherein the signalling unit (20) is held in the operating position by a clamping force of the elastic element (10),
in particular wherein the signalling unit (20) is pressed against parts of the heat exchanger (2) by the elastic element (10).

14. Heat exchanger (2) according to any one of claims 7 to 13, comprising an optical signalling unit (20),
- in particular wherein the optical signalling unit (20) is arranged to generate a bi-stable optical signal, wherein a bi-stable optical signal is an optical signal which is either in an activated state or in a non-activated state, wherein the change from one state to the other state requires an influence, and wherein the optical signalling unit (20) is arranged to activate the bi-stable optical signal by the mechanical deformation of the elastic element,
in particular to generate a further mechanical deformation by the mechanical deformation and to activate the bi-stable optical signal by the further mechanical deformation.

15. Heat exchanger (2) according to any one of claims 7 to 14, wherein the heat exchanger (2) is adapted to be activated by a force acting on
- the device (1) and/or
- a part of the device (1) and/or
- another part of the heat exchanger (2)
to activate the acoustic signal (29) of the signalling unit (20),
in particular wherein the heat exchanger (2) is set up to perform a manually triggerable self-test of the device (1) to test the functionality of the device and/or the charging of a battery without having to cause an artificial leak.

## Revendications

1. Dispositif (1)
- pour la détection et la signalisation d'une fuite
dans un système de conduites à double paroi (40) d'un échangeur de chaleur (2) pour chauffer de l'eau fraîche au moyen de la chaleur des eaux usées dans le domaine sanitaire, par détection du liquide de fuite qui, en cas de fuite, peut passer d'un espace intermédiaire dans une cavité (30),
comprenant
- un élément élastique (10)
- et une unité de signalisation (20), dans lequel
- l'unité de signalisation (20) est adaptée pour générer un signal acoustique (29), et
- pour activer par une déformation mécanique de l'élément élastique (10), l'unité de signalisation (20).
**caractérisé en ce que** le dispositif comprend :
- la cavité (30), qui est adaptée pour être reliée à un espace intermédiaire (41) du système de conduite à double paroi (40),
où
- l'élément élastique (10) forme une partie de la délimitation de la cavité (30),
- l'élément élastique (10) est étanche aux liquides,
- le dispositif est conçu pour augmenter la pression dans la cavité (30) grâce au liquide de fuite qui s'écoule dans la cavité (30),
- et à provoquer, par cette augmentation de pression, la déformation mécanique de l'élément élastique (10) par le liquide de fuite qui s'écoule dans la cavité (30).

2. Dispositif (1) selon l'une des revendications précédentes, dans lequel l'élément élastique (10) est conçu comme une membrane.

3. Dispositif (1) selon l'une quelconque des revendications précédentes, comprenant
- un élément sensible au champ magnétique (21),
- un élément magnétique (11),
et en particulier un aimant permanent (12),
le dispositif étant agencé pour modifier, par la déformation mécanique de l'élément élastique (10), une position spatiale relative entre l'élément sensible au champ magnétique (21) et l'élément magnétique (11) et pour activer l'unité de signalisation (20) par la modification de la position spatiale relative.

4. Dispositif (1) selon la revendication 3, dans lequel l'élément sensible au champ magnétique (21) est un commutateur à actionnement magnétique (22),
en particulier un contact Reed (23),
et le dispositif est conçu pour déclencher la fermeture d'un circuit électrique (24) par la déformation mécanique de l'élément élastique (10).

5. Dispositif (1) selon l'une des revendications précédentes, dans lequel l'unité de signalisation (20) comprend un circuit intégré (25),
en particulier un circuit intégré programmable (25).

6. Dispositif (1) selon l'une des revendications précédentes, dans lequel l'unité de signalisation (20) est agencée pour émettre un signal acoustique (29) de fréquence et de fréquence différentes.
- avec une fréquence variable et/ou
- avec des interruptions,
en particulier avec des interruptions qui s'allongent dans le temps.

7. Échangeur de chaleur (2) comprenant un système de canalisation à double paroi (40) pour chauffer de l'eau douce au moyen de la chaleur des eaux usées dans le domaine sanitaire avec un dispositif (1) selon l'une des revendications précédentes,
en particulier pour une utilisation dans une douche ou une baignoire.

8. Echangeur de chaleur (2) selon la revendication 7, comprenant une cavité (30),
- l'élément élastique (10) fonnant une partie de la délimitation de la cavité (30),
- dans lequel l'échangeur de chaleur (2) est adapté pour diriger le liquide de fuite et/ou l'air déplacé dans la cavité (30) en cas de fuite dans le système de conduits à double paroi (40), et
- dans lequel l'échangeur de chaleur (2) est adapté pour produire la déformation mécanique de l'élément élastique (10) par le liquide de fuite et/ou l'air déplacé qui s'écoule dans la cavité (30).

9. Echangeur de chaleur (2) selon l'une des revendications 7 à 8, dans lequel un circuit électrique (24) est fermé lorsque la surpression dans la cavité (30) dépasse 20 mbar.

10. Echangeur de chaleur (2) selon l'une des revendications 7 à 9, dans lequel le dispositif (1) est configuré selon l'une des revendications 4 ou 5, et dans lequel la distance entre une position de repos et une position de commutation de l'élément magnétique (11) est d'au moins 2 mm.

11. Echangeur de chaleur (2) selon l'une quelconque des revendications 7 à 10, dans lequel l'élément élastique (10) est adapté pour agir comme une soupape de surpression,
en particulier dans lequel l'élément élastique (10) est adapté pour évacuer le liquide et/ou le gaz de la cavité (30) à partir d'une surpression dans la cavité (30) d'au moins 100 mbar.

12. Echangeur de chaleur (2) selon l'une des revendications 7 à 11, dans lequel l'unité de signalisation (20) comprend des composants (26, 27) adaptés pour empêcher la déformation mécanique nécessaire à l'activation de l'unité de signalisation (20),
en particulier en fonctionnement normal, c'est-à-dire en fonctionnement sans fuite.

13. Echangeur de chaleur (2) selon l'une quelconque des revendications 7 à 12, dans lequel l'unité de signalisation (20) est maintenue en position de fonctionnement par une force de serrage de l'élément élastique (10),
en particulier dans lequel l'unité de signalisation (20) est pressée par l'élément élastique (10) contre des parties de l'échangeur de chaleur (2).

14. Echangeur de chaleur (2) selon l'une quelconque des revendications 7 à 13, comprenant une unité de signalisation optique (20),
- en particulier dans lequel l'unité de signalisation optique (20) est agencée pour générer un signal optique bi-stable, dans lequel un signal optique bi-stable est un signal optique qui est soit dans un état activé soit dans un état non activé, le changement d'un état à l'autre nécessitant une action d'influence, et dans lequel l'unité de signalisation optique (20) est agencée pour activer le signal optique bi-stable par la déformation mécanique de l'élément élastique,
en particulier pour générer une autre déformation mécanique par la déformation mécanique et pour activer le signal optique bi-stable par l'autre déformation mécanique.

15. Échangeur de chaleur (2) selon l'une quelconque des revendications 7 à 14, dans lequel l'échangeur de chaleur (2) est adapté pour être activé par une action de force sur
- le dispositif (1) et/ou
- une partie du dispositif (1) et/ou
- une autre partie de l'échangeur de chaleur (2)
d'activer le signal sonore (29) de l'unité de signalisation (20),
en particulier, l'échangeur de chaleur (2) étant agencé pour effectuer un autotest du dispositif (1), déclenchable manuellement, pour tester le bon fonctionnement du dispositif et/ou la charge d'une batterie, sans devoir provoquer une fuite artificielle.
